# EUROPÄISCHE PATENTSCHRIFT

(11) **EP 3 667 197 B1**
(45) Veröffentlichungstag und Bekanntmachung des Hinweises auf die Patenterteilung: **26.03.2025**
(21) Anmeldenummer: 19212872.6
(22) Anmeldetag: 02.12.2019
(51) Int. Cl.: F24H 3/04, B60H 1/22

(54) **ELEKTRISCHE HEIZVORRICHTUNG**
ELECTRIC HEATING DEVICE
DISPOSITIF DE CHAUFFAGE ÉLECTRIQUE

(30) Priorität: 03.12.2018 DE 102018220858
(43) Veröffentlichungstag der Anmeldung: 17.06.2020
(73) Patentinhaber: Eberspächer catem GmbH & Co. KG, 76863 Herxheim (DE)
(72) Erfinder: Walz, Kurt, 76767 Hagenbach (DE); Asafi, Ahmad, 76149 Karlsruhe (DE); Niederer, Michael, 76889 Kapellen-Drusweiler (DE); Kachelhoffer, Patrick, 67160 Seebach (FR)
(74) Vertreter: Grünecker Patent- und Rechtsanwälte PartG mbB

(56) Entgegenhaltungen:
- EP-A1- 2 025 541
- EP-A1- 2 242 327
- EP-A1- 2 299 201
- EP-A2- 0 220 003
- EP-A2- 0 243 077
- EP-A2- 1 715 276
- WO-A1-2008/122362
- DE-A1- 102014 208 955
- JP-A- H07 324 884
- US-A1- 2014 124 494

## Beschreibung

Die vorliegende Erfindung betrifft eine elektrische Heizvorrichtung mit einer Ein- und Auslassöffnung für ein zu erwärmendes Fluid bildendes Gehäuse, das einen geschichteten Aufbau umschließt, der wenigstens ein PTC-Element, das elektrisch leitend mit Anschlüssen unterschiedlicher Polarität verbunden ist, und beidseitig mit dem PTC-Element wärmeleitend verbundene wärmeabgebende Elemente umfasst.

Eine solche elektrische Heizvorrichtung ist beispielsweise aus EP 2 607 121 A1 der vorliegenden Anmelderin vorbekannt. Bei dieser vorbekannten Lösung ist das PTC-Element über ein Kontaktblech elektrisch leitend kontaktiert, welches wiederum zur Ausbildung eines Anschlusses mit einem Kontaktstift verbunden ist. Weitere gattungsgemäße elektrische Heizvorrichtungen insbesondere für ein Kraftfahrzeug sind aus EP 2 299 201 A1 oder EP 2 242 327 A1 bekannt.

Aus EP 0 243 077 A2 ist eine elektrische Heizvorrichtung für ein Kraftfahrzeug mit als Kontaktbleche ausgebildeten Leiterbahnen bekannt, die auf ihrer Innenfläche PTC-Elemente zwischen sich einklemmen und auf ihrer Außenfläche mit Wellrippenelementen kontaktiert sind. Jedes der Wellrippenelemente besteht jeweils aus einer mäandrierend gebogenen Blechbahn. Zur Erhöhung der Wärmeübertragung an die zu erwärmende Luft weisen die Blechbahnen durch Stanzen und Biegen des Blechs aus der Ebene herausgebogene Durchbrechungen auf, die jeweils Luftdurchtrittsöffnungen durch das Blechmaterial ausformen. Ein ähnliches Konzept zur Vergrößerung der Wärmeübertragungsfläche einer Wellrippenlage aus gebogenem Blechmaterial ist aus US 2014/012 4494 A1 bekannt.

Die vorliegende Erfindung will eine elektrische Heizvorrichtung angeben, die in verbesserter Weise bei möglichst einfacher Gestaltung die von den PTC-Elementen erzeugte Wärme abzuleiten vermag.

Bei diesen vorbekannten elektrischen Heizvorrichtungen erstrecken sich die wärmeabgebenden Elemente als Rippen zwischen wärmeerzeugenden Lagen des Schichtaufbaus, die durch das bzw. die in einer Ebene hintereinanderliegenden PTC-Elemente und die zur Bestromung derselben vorgesehenen Leiterbahnen gebildet sind. Dabei bestehen die wärmeabgebenden Elemente aus mäandrierend gebogenen Blechstreifen, die unmittelbar oder unter Zwischenlage einer isolierenden Schicht (vgl. EP 2 873 296 A2) gegen die wärmeerzeugende Lage anliegen.

Für die Wirksamkeit der elektrischen Heizvorrichtung der vorerwähnten Art ist eine effektive Wärmeabfuhr bedeutsam. Der Fachmann ist daher bemüht, thermische Widerstände zwischen der wärmeerzeugenden Lage und den wärmeabgebenden Elementen, die üblicherweise beidseitig an der wärmerzeugenden Lage anliegen, gering zu halten.

Im Hinblick darauf schlägt die vorliegende Erfindung eine elektrische Heizeinrichtung gemäß Anspruch 1 vor, bei der das wärmeabgebende Element aus einem mit Durchbrechungen versehenen flächigen Gebiete aus wärmeleitendem Material in Form eines Drahtgeflechts oder eines Streckmetalls ausgebildet ist. Dieses flächige Gebilde hat erfindungsgemäß über die gesamte flächige Erstreckung derselben Durchbrechungen. Das flächige Gebilde in Form des Drahtgeflechts kann wärmeleitende Fasern umfassen und bevorzugt als Gewebe aus den wärmeleitenden Fasern ausgebildet sein. Das flächige Gebilde ist bevorzugt als Geflecht ausschließlich aus Draht ausgebildet. Der Draht ist bevorzugt ein metallischer Draht. Das Drahtgeflecht hat bevorzugt wie ein einfaches Gewebe jeweils alternierend sich kreuzende "Kett- und Schussfäden".

Als nicht erfindungsgemäßes flächiges Gebilde kann aber auch ein stanzbearbeitetes Blech, beispielsweise ein Streckmetall oder ein Lochblech verwendet werden. Sofern ein Lochblech verwendet wird ist es zu bevorzugen, die Ränder der ausgestanzten Löcher aus der Ebene des Lochblechs herauszubiegen, um aus der eigentlichen Blechebene herausragende Vorsprünge auszubilden, an denen das zu erwärmende Medium beim Überstreichen des wärmeabgebenden Elements verwirbelt wird, wodurch die Wärmeübertragung zwischen dem wärmeleitenden Element und dem zu erwärmenden Medium verbessert wird. Ein Lochblech ist dabei ein mit einem regelmäßigen Raster aus Löchern versehenes Blech. Das Raster erstreckt sich dabei zumindest überwiegend, wenn nicht gar vollständig über die gesamte Fläche des Blechs. Das Lochblech ist bevorzugt eine Lochplatte gemäß DIN 4185-2 bzw. DIN 24021, wobei die Platte in der Regel aus Kupfer oder Aluminium gebildet ist. Entsprechendes gilt für das Material des Streckmetalls.

Das die Ein- und Auslassöffnungen für das zu erwärmende Medium bildende Gehäuse ist vorzugsweise aus Kunststoff ausgebildet. Es umschließt den geschichteten Aufbau und bildet die vorzugsweise in zueinander parallelen Ebenen angeordneten Ein- und Auslassöffnungen aus. Bevorzugt ist das Gehäuse ein rahmenförmiges Gehäuse, welches den gesamten Schichtaufbau innerhalb des rahmenförmigen Gehäuses freilässt, so dass das zu erwärmende Medium den Schichtaufbau überstreichen kann. Bei dieser bevorzugten Weiterbildung umgibt das Gehäuse bevorzugt den geschichteten Aufbau eng, so dass das zu erwärmende und das rahmenförmige Gehäuse durchsetzende Medium notwendig den geschichteten Aufbau überstreichen muss und somit zwangsläufig erwärmt wird.

Die Ausrichtung der Ein- und Auslassöffnungen relativ zu dem geschichteten Aufbau ist dabei bevorzugt so, dass das zu erwärmende Medium den geschichteten Aufbau in einer Richtung im Wesentlichen rechtwinklig zu den Lagen des geschichteten Aufbaus durchsetzt.

Dieser Schichtaufbau kann Leiterelemente beispielsweise in Form von Kontaktblechen umfassen, die zwischen sich das zumindest eine PTC-Element aufnehmen. Solche Leiterelemente können die zuvor erwähnten Anschlüsse zum elektrischen Anschluss der PTC-Elemente an den Leistungsstrom sowie das PTC-Element kontaktierende Leiterbahnen ausbilden. Solche Leiterelemente können aus einem stanzbearbeiteten Blech gebildet sein. Die Leiterelemente können zum Ausformen der Anschlüsse jeweils durch Stanzen freigeschnittene Kontaktzungen aufweisen oder diese einteilig ausbilden.

Die wärmeabgebenden Elemente können unmittelbar oder unter Zwischenlage des Leiterelementes gegen das PTC-Element anliegen. Ebenso ist es möglich, das wärmeabgebende Element unter Zwischenlage einer Isolierlage und damit mittelbar gegen das Leiterelement anzulegen. Das wärmeabgebende Element kann ausschließlich aus dem Drahtgeflecht ausgeformt sein.

Zu bevorzugen ist ein plattenförmiger Träger, der zwischen dem wärmeabgebenden Element und dem PTC-Element vorgesehen ist und gegen den das wärmeabgebende Element wärmeleitend an dem PTC-Element anliegt. Ein solcher plattenförmiger Träger hat im Grunde die Grundfläche der wärmeerzeugenden Lage. Diese wärmeerzeugende Lage kann ausschließlich durch ein PTC-Element und/oder mehrere in der entsprechenden Schichtebene hintereinanderliegende PTC-Elemente und den dazu vorgesehenen elektrischen Leiterelementen gebildet sein. Die wärmeerzeugende Lage kann auch einen Positionsrahmen aus einem elektrisch isolierenden Material umfassen, der das bzw. die PTC-Elemente in sich aufnimmt und lagepositioniert.

Der zuvor erwähnte plattenförmige Träger kann mit dem wärmeabgebenden Element als vormontierte Einheit ausgebildet sein, beispielsweise verschweißt, umbördelt oder verklebt sein, so dass der plattenförmige Träger zusammen mit dem wärmeabgebenden Element als Zwischenerzeugnis bei der Montage der elektrischen Heizvorrichtung gehandhabt werden kann. Zwischen dem plattenförmigen Träger und dem PTC-Element kann noch das Leiterelement vorgesehen sein. So befindet sich das Leiterelement in Wärmeaustragrichtung zwischen dem wärmeabgebenden Element und dem PTC-Element. Das PTC-Element liegt bei dieser Fallgestaltung mit einer wärmeabgebenden Hauptseitenfläche mittelbar oder unmittelbar an dem wärmeabgebenden Element an. Bei einer unmittelbaren Anlage überdeckt das Leiterelement üblicherweise nicht oder allerhöchstens geringfügig die Hauptseitenfläche des PTC-Elements. Statt einer Isolierlage kann das wärmeabgebende Element auch gegen ein elektrisch nicht-isolierendes Blech angelegt und mit diesem verbunden sein. Dieses Blech bildet die Anlagefläche unmittelbar zu dem PTC-Element bzw. dem auf das PTC-Element aufgelegten Leiterelement.

Gemäß einer bevorzugten Weiterbildung der vorliegenden Erfindung bildet das wärmeabgebende Element auch elektrisch leitend an dem PTC-Element anliegende Leiterbahnen aus. Bei dieser Fallgestaltung sind spezifisch gebogene Segmente des wärmeabgebenden Elementes als bestmöglich zur Übertragung der Wärme und Ableitung derselben von dem PTC-Element an das zu erwärmende Medium ausgeformte Heizrippen ausgebildet, wohingegen andere Segmente des Drahtgeflecht elektrisch leitend mit dem PTC-Element verbunden sind, um dieses zu bestromen. Gemäß einer bevorzugten Weiterbildung der vorliegenden Erfindung ist jedes der wärmeabgebenden Elemente aus zumindest einer Bahn Drahtgeflecht ausgeformt. Das Drahtgeflecht ist hierzu bevorzugt biegebearbeitet, so dass aus dem flächigen Gebilde durch plastische Verformung verschiedene funktionale Elemente ausgeformt werden. Details hierzu sind in der nachfolgenden speziellen Beschreibung der Erfindung verdeutlicht.

Weitere Einzelheiten und Vorteile ergeben sich aus der nachfolgenden Beschreibung von Ausführungsbeispielen in Verbindung mit der Zeichnung. In dieser zeigen:
- Fig. 1: eine perspektivische Seitenansicht eines Ausführungsbeispiels einer nichterfindungsgemäßen elektrischen Heizvorrichtung;
- Fig. 2: eine Seitenansicht auf ein Gehäuseunterteil mit darin eingebautem Heizblock des in Fig. 1 gezeigten nicht-erfindungsgemäßen Ausführungsbeispiels;
- Fig. 3: eine perspektivische Seitenansicht in Explosionsdarstellung der wesentlichen Bestandteile eines Ausführungsbeispiels eines wärmeerzeugenden Elementes;
- Fig. 4: eine perspektivische Seitenansicht einer nicht-erfindungsgemäßen ersten Variante eines Ausführungsbeispiels eines wärmeabgebenden Elementes;
- Fig. 5: eine perspektivische Seitenansicht einer nicht-erfindungsgemäßen zweiten Variante eines Ausführungsbeispiels eines wärmeabgebenden Elementes;
- Fig. 6: eine perspektivische Seitenansicht einer erfindungsgemäßen dritten Variante eines Ausführungsbeispiels eines wärmeabgebenden Elementes;
- Fig. 7: eine perspektivische Seitenansicht einer nicht-erfindungsgemäßen vierten Variante eines Ausführungsbeispiels eines wärmeabgebenden Elementes;
- Fig. 8: eine vergrößerte perspektivische Seitenansicht des Details VIII in Figur 7;
- Fig. 9: eine perspektivische Seitenansicht einer nicht-erfindungsgemäßen fünften Variante eines Ausführungsbeispiels eines wärmeabgebenden Elementes;
- Fig. 10: eine perspektivische Seitenansicht einer nicht-erfindungsgemäßen sechsten Variante eines Ausführungsbeispiels eines wärmeabgebenden Elementes;
- Fig. 11: eine perspektivische Seitenansicht einer nicht-erfindungsgemäßen siebten Variante eines Ausführungsbeispiels eines wärmeabgebenden Elementes und
- Fig. 12: eine perspektivische Draufsicht eines Ausführungsbeispiels aus Drahtgeflecht.

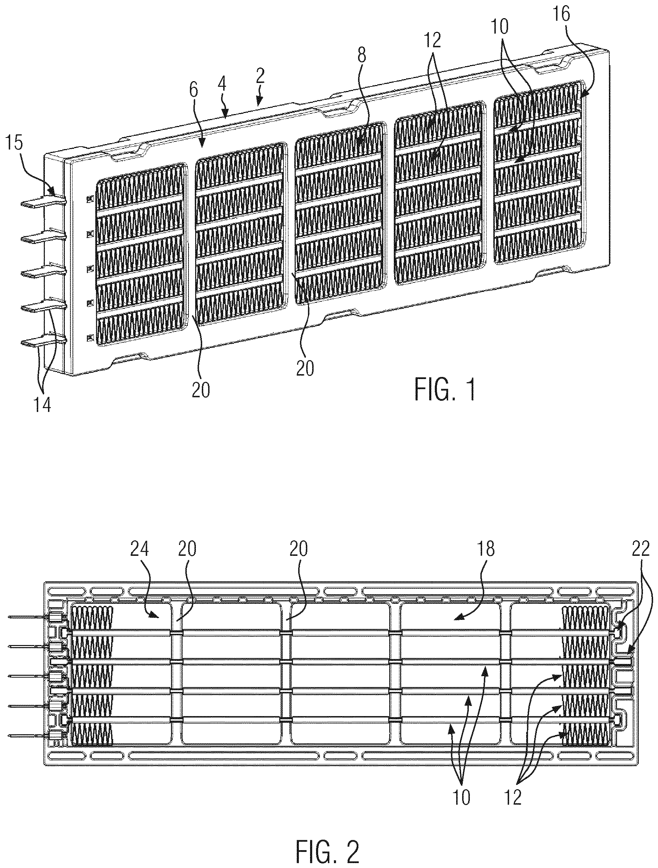

Die Fig. 1 zeigt eine perspektivische Seitenansicht eines nicht-erfindungsgemäßen Ausführungsbeispiels der elektrischen Heizvorrichtung mit einem rahmenförmigen Gehäuse 2, bestehend aus einem Gehäuseunterteil 4 und einem Gehäuseoberteil 6. Beide Gehäuseteile 4, 6 sind formschlüssig miteinander verbunden und nehmen in sich einen Heizblock 8 als geschichteten Aufbau auf, der aus mehreren in parallelen Lagen zueinander angeordneten wärmeerzeugenden Elementen 10 und wärmeabgebenden Elementen 12 besteht.

Die wärmeabgebenden Elemente 12 bestehen aus einem zunächst flächigen und biegebearbeiteten Drahtgeflecht 14, dessen genaue Ausbildung in Varianten nahfolgend noch näher erläutert werden wird.

Das aus Kunststoff gebildete Gehäuse 2 weist zwei gegenüberliegende Rahmenöffnungen auf, von denen in Fig. 1 lediglich die durch das Gehäuseoberteil 6 gebildete Rahmenöffnung 16 zu sehen ist und die jeweils Ein- bzw. Einlassöffnungen für das zu erwärmende Medium ausbilden. Das zu erwärmende Medium ist vorliegend Luft. Das Ausführungsbeispiel ist ein Luftheizer.

Die Fig. 2 zeigt Einzelheiten des Heizblocks 8 und dessen Aufnahme insbesondere in dem Gehäuseunterteil 4 und zeigt das Gehäuseunterteil 4 in einer Draufsicht bei weggenommenem Gehäuseoberteil. Die wärmeabgebenden Elemente 12 sind lediglich unvollständig an den jeweiligen stirnseitigen Enden des Gehäuseunterteils 4 dargestellt. Dementsprechend gibt die Darstellung in Fig. 2 auch einen Blick auf eine von dem Gehäuseunterteil 4 gebildete Rahmenöffnung 18 frei.

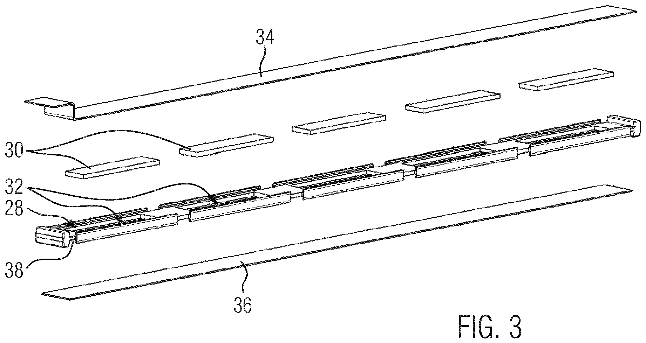

Wie der Fig. 3 zu entnehmen ist in einem Positionsrahmen 28 aus einem isolierenden Material (vorliegend Kunststoff) mehrere PTC-Elemente 30 an vorbestimmten Stellen aufgenommen und durch diesen positioniert. Vorliegend ist zu jedem einzelnen PTC-Element 30 eine Aufnahme 32 in dem Positionsrahmen 28 ausgespart, die dieses PTC-Element 30 umfänglich fasst und somit festlegt. Beidseitig an den jeweiligen PTC-Elementen 30, die nebeneinander in einer Ebene angeordnet sind, liegen Blechbänder 34, 36 an, welche elektrische Leiterbahnen zur Bestromung der PTC-Heizelemente 30 ausbilden und durch welche die von den PTC-Heizelementen erzeugte Wärme an die wärmeabgebenden Elemente 12 mittels Wärmeübertragung geleitet wird. Diese wärmeabgebenden Elemente 12 liegen unmittelbar an den Blechbändern 34, 36 an.

Weitere Details des Ausführungsbeispiels sind in EP 2 025 541 A1 beschrieben.

Die nachfolgende Beschreibung von verschiedenen Ausgestaltungen des wärmeabgebenden Elementes 12 nach der vorliegenden Erfindung gehen von einem wie oben diskutierten grundlegenden Aufbau der elektrischen Heizvorrichtung aus. Die Beschreibung bezieht sich auf ein Blechband 34, gegen welches bei der hier diskutierten Ausführungsform an dem wärmeabgebenden Element 12 anliegt. Wie sich aus der allgemeinen Beschreibung ergibt, kann zwischen dem wärmeabgebenden Element und dem Kontaktblech auch eine hier nicht gezeigte Isolierlage vorgesehen sein.

In den nachstehend diskutierten Figuren ist das Blechband bzw. sofem dieses fehlt, das PTC-Element in Längsrichtung mit geradlinig verlaufenden Rändern gezeigt. Die Längsrichtung entspricht einer Haupterstreckungsrichtung jeder einzelnen Lage des geschichteten Aufbaus. Die Längsrichtung erstreckt sich quer zu der Strömungsrichtung des zu erwärmenden Fluids. Dessen Strömungsrichtung ist mit dem Pfeil F angedeutet. Die Strömungsrichtung F durchsetzt die Ein- und Auslassöffnungen 16, 18 und damit das Gehäuse 2 rechtwinklig.

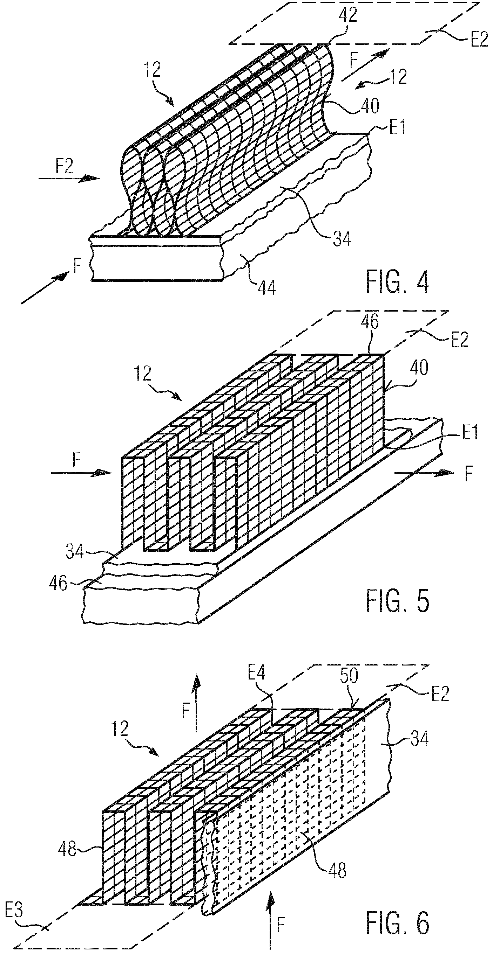

Die Fig. 4 zeigt eine nicht-erfindungsgemäße Ausgestaltung des wärmeabgebenden Elementes 13, wie es grundsätzlich aus dem Stand der Technik bekannt ist. Das wärmeabgebende Element 12 weist Hauptseitenflächen 40 auf, die sich parallel zu dem zu erwärmenden Fluidstrom F und im Wesentlichen quer zu den Lagen des Schichtaufbaus erstrecken und dementsprechend wie Heizrippen 41 wirken. Die Hauptseitenflächen 40 werden durch Stege 42 miteinander verbunden, die sich ebenfalls in Erstreckungsrichtung des Fluidstroms F erstrecken, allerdings im Wesentlichen parallel zu den Lagen des Schichtaufbaus und dementsprechend parallel zu Hauptseitenflächen des PTC-Elementes liegen, die mit Bezugszeichen 44 gekennzeichnet sind und sich parallel zu der Ober- bzw. Unterseite des jeweiligen Blechbandes 34 erstrecken. Zwischen den Stegen 42 und den Hauptseitenflächen 40 sind gekrümmte Übergänge vorgesehen. Die Stege 42 erstrecken sich dabei in zwei parallelen Ebenen, die Ebenen des Schichtaufbaus sind, wobei die untere Ebene E1 vorliegend mit der Oberflächenebene des Blechbandes 34 zusammenfällt und die andere Ebene E2 mit einem Abstand dazu vorgesehen ist, der der Quererstreckung der Heizrippen 41 entspricht. Dabei sind die Stege 42 in einer Richtung quer zu der Durchtrittsrichtung F des zu erwärmenden Mediums nebeneinander angeordnet.

Das zu erwärmende Fluid kann in an sich bekannter Weise die mäandrierend gebogene Bahn des Drahtgewebes durchsetzen, d.h. an den Hauptseitenwänden 40 zur Wärmeauskopplung vorbeistreichen. Aufgrund der ungleichmäßigen Oberfläche des Drahtgewebes ergibt sich indes auch eine Verwirbelung des Luftstromes, die zu einer verbesserten Wärmeübertragung von dem wärmeabgebenden Element 12 auf die zu erwärmende Luft führt.

Auch bei dem in Fig. 5 gezeigten nicht-erfindungsgemäßen Ausführungsbeispiel sind die Hauptseitenflächen 40 der mäandrierend gebogenen Bahn über Stege 46 in zwei sich parallel zu einer wärmeabgebenden Hauptseitenfläche 44 des PTC-Elementes liegenden diskreten Ebenen E1, E2 angeordnet. Allerdings sind diese Stege 46 in Durchtrittsrichtung F des zu erwärmenden Mediums hintereinander angeordnet. Eine solche Ausgestaltung ist prinzipiell auch mit der spezifischen Ausformung der mäandrierend gebogenen Bahn nach Fig. 4 möglich (vgl. dort Strömungsrichtung F2). Ein verbesserter Wärmeaustrag durch Turbulenz wird insbesondere dadurch erreicht, dass der zu erwärmende Fluidstrom F jeweils die Hauptseitenflächen 44 durchsetzen muss und somit beim jeweiligen Durchsetzen der Hauptseitenflächen 40 verwirbelt wird. Dieser Effekt wird unabhängig davon erzielt, ob nun die gebogene Bahn streng rechteckig gebogen ist, wie dies Fig. 5 verdeutlicht, bei der die Stege 46 rechtwinklig von den Hauptseitenflächen 40 abgehen, oder aber ein gerundeter Übergang zwischen den Hauptseitenflächen 40 und den Stegen 42 gewählt ist, wie er prinzipiell in Fig. 4 verdeutlicht wird.

Auch bei dem in Fig. 6 gezeigten erfindungsgemäßen Ausführungsbeispiel ist das wärmeabgebende Element aus einer mäandrierend gebogenen Bahn gebildet, so dass mehrere Hauptseitenflächen 48 über mehrere Stege 50 miteinander verbunden sind. Diese Stege 50 liegen indes in zwei diskreten Ebenen E3, E4, die parallel zu den Ein- und Auslassöffnungen 16, 18 des Gehäuses 2 verlaufen. Dementsprechend durchsetzt der Fluidstrom F des zu erwärmenden Mediums die Stege 56 und streicht im Wesentlichen parallel an den Hauptseitenflächen 48 vorbei. Auch hier ergibt sich aufgrund der nicht gleichmäßig glatten Oberfläche des wärmeabgebenden Elementes 12 eine Verwirbelung an der Oberfläche und somit eine verbesserte Wärmeabfuhr. Diese ergibt sich insbesondere bei der konkreten Ausgestaltung nach Fig. 6, bei welcher das zu erwärmende Fluid beim Eintritt in das wärmeabgebende Element 12 mehrere Stege 50 durchsetzen muss und hierbei verwirbelt wird.

Diese Verwirbelung führt auch zu einer Störung derjenigen Luftschichten, die zwischen die Hauptseitenflächen 48 gelangen ohne dabei einen Steg 50 durchsetzen zu müssen.

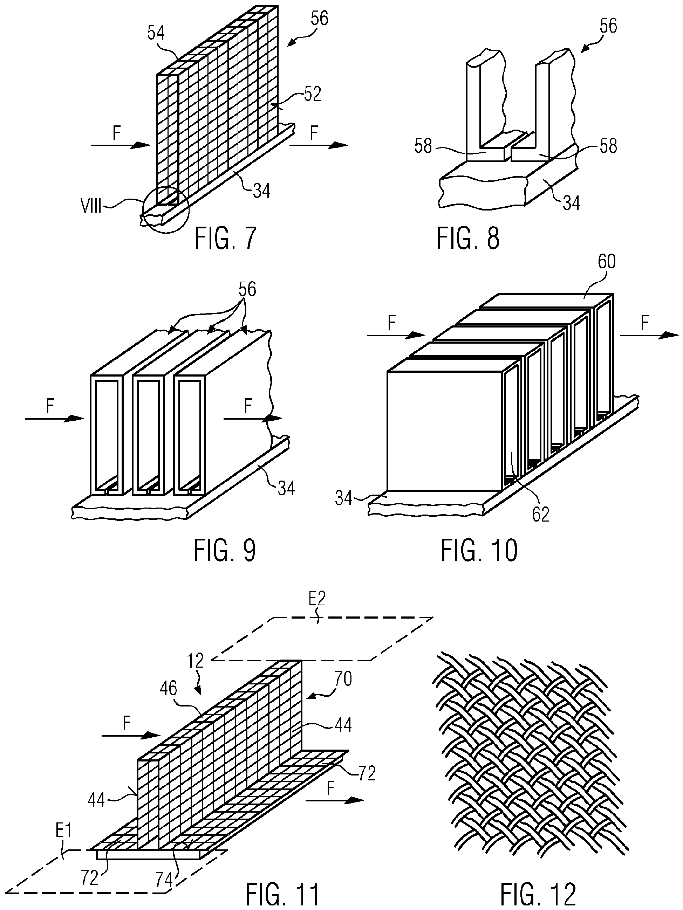

Die Fig. 7 zeigt ein weiteres nicht-erfindungsgemäßes Ausführungsbeispiel eines wärmeabgebenden Elementes der vorliegenden Erfindung, welches durch Biegen eines mit Durchbrechungen versehenen flächigen Gebildes in Form eines Drahtgeflechts ausgeformt ist. Dieses flächige Gebilde ist allerdings vorliegend nicht mäandrierend gebogen. Vielmehr hat das Gebilde zwei sich im Wesentlichen rechtwinklig zur Durchtrittsrichtung F des zu erwärmenden Fluids erstreckende Hauptseitenflächen 52, und die über einen einzigen Steg 54 miteinander verbunden sind, der sich parallel zu den Lagen des Schichtaufbaus erstreckt. Der Steg 54 befindet sich auf der dem PTC-Element 30 gegenüberliegenden Seite. Hierdurch ergibt sich eine in Fig. 7 mit Bezugszeichen 56 gekennzeichnete wärmeabgebende Rippe. Gegenüberliegend zu dem Steg 54 kann die Rippe 56 offen sein. Die Hauptseitenflächen 52 erstrecken sich parallel zu den Ein- bzw. Auslassöffnungen 16, 18 des Gehäuses 2. Der Steg 54 hingegen erstreckt sich parallel zu der Durchtrittsrichtung F. Die Rippe 56 hat ferner an der dem Steg 54 gegenüberliegenden Seite zwei sich parallel zu dem Steg 54 erstreckende Befestigungssegmente 58, die durch Umbiegen des flächigen Gebildes/Drahtgeflechtes ausgebildet sind und mit dem Blechband 34 verklebt sein können, um eine gute Wärmeübertragung zu gewährleisten, vgl. vergrößertes Detail in Fig. 8.

Die Fig. 9 zeigt mehrere in Durchtrittsrichtung F des zu erwärmenden Fluids hintereinander vorgesehene Rippen 56, die jeweils wie die zu den Fig. 7 und 8 beschriebene Rippe 56 ausgebildet und an dem Blechband 34 befestigt sind. Dieses Ausführungsbeispiel ist ebenfalls nicht Gegenstand der Erfindung. Durch Befestigen an dem Blechband 34 können die Rippen 56 zusammen mit dem Blechband als vormontierte Einheit gehandhabt werden. Die Rippen 56 können mit dem Blechband 34 verlötet oder verklebt werden.

Die zuvor unter Bezugnahme auf die Fig. 7 und 9 beschriebene Art der Befestigung zwischen dem wärmeabgebenden Element 12 und dem zugeordneten Blechband 34 gilt auch für die übrigen Ausführungsbeispiele. Es kann auch ein weiteres Blechband vorgesehen sein, das lediglich der Kontaktierung und/oder Vormontage des gebogenen flächigen Gebildes dient und gegen das Blechband 34 bzw. 36 direkt oder unter Zwischenlage einer Isolierlage anliegen kann.

Die Fig. 10 zeigt ein nicht-erfindungsgemäßes alternatives Ausführungsbeispiel, bei welchem das wärmeabgebende Element mehrere Hohlzylinder 60 umfasst. Diese Hohlzylinder sind durch Biegen des flächigen Gebildes geformt und bilden einen Hohlraum 62 aus, der sich rechtwinklig zu den Lagen des Schichtaufbaus 34 und entlang einer Durchtrittsrichtung F erstreckt. Dementsprechend stehen die Hohlzylinder 60 auf dem zugeordneten Blechband auf. Die Fig. 10 zeigt rechteckige Hohlzylinder 60. Es versteht sich, dass die verdeutlichte Grundform nur exemplarisch ist. Die Hohlzylinder 60 können jede beliebige Grundfläche aufweisen, also auch oval, rund oder polygonal gebogen sein. Quer zur Durchtrittsrichtung F des zu erwärmenden Fluids sind in einer Ebene des Schichtaufbaus mehrere Hohlzylinder 60 nebeneinander vorgesehen.

Die Fig. 11 zeigt eine ebenfalls nicht-erfindungsgemäße Abwandlung zu dem Ausführungsbeispiel nach Fig. 5. Dabei verdeutlicht Fig. 11 lediglich eine einzige Rippe 70 mit zwei Hauptseitenflächen 44, die über lediglich einen Steg 46 miteinander verbunden sind. Es können selbstverständlich mehrere Heizrippen wie in Fig. 5 in Durchtrittsrichtung F des zu erwärmenden Fluids hintereinander vorgesehen sein. Sich quer zu der Haupterstreckungsrichtung der Rippe 70 sind durch Biegen Befestigungssegmente 72 ausgebildet. Diese Befestigungssegmente 72 sind unmittelbar mit der Hauptseitenfläche 74 des PTC-Elementes 30 verbunden. Bei diesem Ausführungsbeispiel erfolgt die Bestromung unmittelbar durch das wärmeabgebende Element 12. Dieses kann zu diesem Zweck eine durch Stanzen des flächigen Gebildes ausgeformte Anschlussfahne für die Einleitung des Leistungsstromes aufweisen. Bei einem Drahtgeflecht kann die Anschlussfahne auch aus einem Blechmaterial ausgestanzt und mit dem Drahtgeflecht durch Löten verbunden sein.

Die zuvor diskutierten Ausführungsbeispiele stellen jeweils einen verbesserten Wärmeaustrag bereit, da die die wärmeabgebenden Elemente 12 überstreichende Luft an der nicht glatten Oberfläche des wärmeabgebenden Elementes 12 verwirbelt wird, wodurch sich eine verbesserte Wärmeübertragung ergibt.

Die Figur 12 zeigt ein Beispiel eines flächigen Gebildes 80 in Form eines Drahtgeflechtes, aus dem die zuvor diskutierte Gestaltung von wärmeabgebenden Elementen 12 gebogen werden kann.

### Bezugszeichenliste

- 2: Gehäuse
- 4: Gehäuseunterteil
- 6: Gehäuseoberteil
- 8: Heizblock
- 10: wärmeerzeugende Element
- 12: wärmeabgebendes Element
- 14: Kontaktzunge
- 15: Schlitz
- 16: Rahmenöffnung/ Einlassöffnung
- 18: Rahmenöffnung/Auslassöffnung
- 28: Positionsrahmen
- 30: PTC-Element
- 32: Aufnahme für PTC-Heizelement
- 34: Blechband
- 36: Blechband
- 40: Hauptseitenfläche des wärmeabgebenden Elements
- 41: Heizrippen
- 42: Steg
- 44: Hauptseitenfläche des PTC-Elements
- 46: Steg
- 48: Hauptseitenfläche des wärmeabgebenden Elements
- 50: Steg
- 52: Hauptseitenfläche des wärmeabgebenden Elements
- 54: Steg
- 56: Rippe
- 58: Befestigungssegment
- 60: Hohlzylinder
- 62: Hohlraum
- 70: Rippe
- 72: Befestigungssegment
- 74: Hauptseitenfläche des PTC-Elements
- 80: flächiges Gebilde / Drahtgeflecht
- E1: erste Ebene
- E2: zweite Ebene
- E3: erste Ebene
- E4: zweite Ebene
- F: Durchtrittsrichtung des zu erwärmenden Fluids

## Patentansprüche

1. Elektrische Heizvorrichtung, insbesondere für ein KFZ, mit einem Ein- und Auslassöffnungen (16; 18) für ein zu erwärmendes Medium bildenden Gehäuse (2), das einen geschichteten Aufbau (8) umschließt, der wenigstens ein PTC-Element (30), das elektrisch leitend mit Anschlüssen unterschiedlicher Polarität verbunden ist, und beidseitig mit dem PTC-Element (30) wärmeleitend verbundene wärmeabgebende Elemente (12) umfasst, **dadurch gekennzeichnet, dass** die wärmeabgebenden Elemente (12) ein mit Durchbrechungen versehenes flächiges Gebilde (80) in Form eines Drahtgeflechts oder eines Streckmetalls aus wärmeleitendem Material umfassen, dass das flächige Gebilde (80) über die gesamte flächige Erstreckung derselben Durchbrechungen hat, dass das wärmeabgebende Element (12) aus einer mäandrierend gebogenen Bahn gebildet ist und Hauptseitenflächen (48) aufweist, die durch Stege (46, 50) miteinander verbunden sind, dass die Stege (46, 50) in zwei diskreten Ebenen (E3, E4) liegen, die parallel zu dem Ein- und Auslassöffnungen (16, 18) des Gehäuses (2) verlaufen, und rechtwinklig von den Hauptseitenflächen (48) abgehen und dass das wärmeabgebende Element (12) mit einer der Hauptseitenflächen (48) unter Zwischenlage eines plattenförmigen Trägers (34) wärmeleitend an dem PTC-Element (30) anliegt.

2. Elektrische Heizvorrichtung nach Anspruch 1, **dadurch gekennzeichnet, dass** das wärmeabgebende Element (12) aus dem mit Durchbrechungen versehenen flächigen Gebilde (80) gebildet ist.

3. Elektrische Heizvorrichtung nach einem der vorherigen Ansprüche, **dadurch gekennzeichnet, dass** das mit Durchbrechungen versehene flächige Gebilde (80) das wärmeabgebende Element (12) und eine elektrisch leitend mit dem PTC-Element (30) verbundene Leiterbahn ausbildet.

4. Elektrische Heizvorrichtung nach einem der vorherigen Ansprüche, **dadurch gekennzeichnet, dass** das Gehäuse (2) rahmenförmig ausgebildet ist und an gegenüberliegenden Seiten die Ein- und Auslassöffnungen (16; 18) ausbildet, zwischen denen der geschichtete Aufbau (8) freiliegt.

5. Elektrische Heizvorrichtung nach einem der vorherigen Ansprüche, **dadurch gekennzeichnet, dass** jedes der wärmeabgebenden Elemente (12) aus zumindest einer Bahn des mit Durchbrechungen versehenen flächigen Gebilde (80) aus wärmeleitendem Material gebildet ist, die mäandrierend gebogen ist.

6. Elektrische Heizvorrichtung nach Anspruch 5, **dadurch gekennzeichnet, dass** die Hauptseitenflächen (40) der mäandrierend gebogenen Bahn über Stege (42, 46) miteinander verbunden sind, die in zwei sich parallel zu einer wärmeabgebenden Hauptseitenfläche des PTC-Elementes liegenden Ebenen (E1; E2) angeordnet sind.

7. Elektrische Heizvorrichtung nach Anspruch 6, **dadurch gekennzeichnet, dass** die Stege (42) in einer Richtung quer zu einer Durchtrittsrichtung (F) des zu erwärmenden Mediums nebeneinander angeordnet sind.

8. Elektrische Heizvorrichtung nach Anspruch 6, **dadurch gekennzeichnet, dass** die Stege (46) in Durchtrittsrichtung (F) des zu erwärmenden Mediums hintereinander angeordnet sind.

9. Elektrische Heizvorrichtung nach Anspruch 5, **dadurch gekennzeichnet, dass** die Hauptseitenflächen der mäandrierend gebogenen Bahn über Stege (50) miteinander verbunden sind, die in zwei, sich parallel zu der Ein- bzw. Auslassöffnung (16; 18) liegenden Ebenen (E3; E4) angeordnet sind.

10. Elektrische Heizvorrichtung nach einem der Ansprüche 1 bis 4, **dadurch gekennzeichnet, dass** jedes der wärmeabgebenden Elemente (12) zumindest eine Bahn des mit Durchbrechungen versehenen flächigen Gebildes aus wärmeleitendem Material aufweist, die als wärmeabgebende Rippe (56) gebogen ist, die zumindest zwei sich im Wesentlichen parallel zu der Ein- bzw. Auslassöffnung erstreckende Hauptseitenfläche (52) und einen, die Hauptseitenflächen auf einer dem PTC-Element (30) gegenüberliegenden Seite verbindenden Steg (54) aufweisen.

11. Elektrische Heizvorrichtung nach Anspruch 10, **dadurch gekennzeichnet, dass** in Durchtrittsrichtung (F) des zu erwärmenden Mediums mehrere Rippen (56) hintereinander angeordnet sind.

12. Elektrische Heizvorrichtung nach einem der vorherigen Ansprüche, **dadurch gekennzeichnet, dass** das Leiterbahn durch zumindest ein zumindest teilflächig gegen das PTC-Element anliegendes umbogenes Segment des wärmeabgebenden Elements gebildet ist.

## Claims

1. Electric heating device, in particular for a motor vehicle having an inlet and outlet opening (16, 18) for a housing (2) which forms a medium to be heated and which encloses a layered structure (8) comprising at least one PTC element (30) which is electrically conductively connected to connections of different polarity, and which comprises heat-emitting elements (12) heat conductively connected on both sides to the PTC element (30),
**characterized in that**
the heat-emitting elements (12) include a panel element (80) provided with perforations in form of a mesh wire or an expanded metal or a perforated sheet and made of heat-conducting material, that the panel element (80) has perforations throughout its entire extent, that the heat-emitting element (12) is formed from a meandering bent sheet and has main side surfaces (48), which are connected to each other by webs (46, 50), that the webs (46, 50) are located at two discrete planes (E3, E4), which run parallel to the inlet and outlet openings (16, 18) of the housing (2) and branch off at right angles from the main side surfaces (40) and that the heat-emitting element (12) abuts the PTC element (30) in a heat-conducting manner with an intermediate layer of a plate-shaped carrier (34).

2. Electric heating device according to claim 1, **characterized in that** the heat-emitting element (12) is formed from the panel element (80) provided with perforations.

3. Electric heating device according to one of the preceding claims, **characterized in that** the panel element forms the heat-emitting element (12) and a conducting element which electrically conductively abuts the PTC element (30).

4. Electric heating device according to one of the preceding claims, **characterized in that** the housing (2) is frame-shaped and forms on opposite sides the inlet and outlet openings (16; 18) between which the layered structure (8) is exposed.

5. Electric heating device according to one of the preceding claims, **characterized in that** each of the heat-emitting elements (12) is formed of at least one track of the perforated panel element (80) of heat-conducting material which is meanderingly bent.

6. Electric heating device according to claim 5, **characterized in that** the main side surfaces (40) of the meanderingly bent track are connected to one another via webs (42, 46) which are arranged in two planes (E1; E2) lying parallel to a heat-emitting main side surface of the PTC element.

7. Electric heating device according to claim 6, **characterized in that** the webs (42) are arranged side by side in a direction transverse to a direction of penetration (F) of the medium to be heated.

8. Electric heating device according to claim 6, **characterized in that** the webs (46) are arranged one behind the other in the direction of penetration (F) of the medium to be heated.

9. Electric heating device according to claim 5, **characterized in that** the main side surfaces of the meandering bent track are connected to one another via webs (50) which are arranged in two planes (E3; E4) lying parallel to the inlet or outlet opening (16; 18).

10. Electric heating device according to one of claims 1 to 4, **characterized in that** each of the heat-emitting elements (12) comprises at least one path of the perforated panel element of heat-conducting material bent as a heat-emitting rib (56) comprising at least two main side surfaces (52) extending substantially parallel to the inlet and outlet openings, respectively, and a web (54) connecting the main side surfaces on a side opposite the PTC element (30).

11. Electric heating device according to claim 10, **characterized in that** a plurality of ribs (56) are arranged one behind the other in the direction of penetration (F) of the medium to be heated.

12. Electric heating device according to one of the preceding claims, **characterized in that** the conducting element is formed by at least one bent segment of the heat-emitting element which abuts at least partially against the PTC element.

## Revendications

1. Dispositif de chauffage électrique, en particulier pour un véhicule automobile, comprenant des ouvertures d'entrée et de sortie (16 ; 18) pour un carter (2) qui forme un milieu à chauffer et entoure un corps stratifié (8) qui comprend au moins un élément PTC (30), relié de manière électriquement conductrice à des bornes de polarité différente, et des éléments de dissipation de chaleur (12) reliés de manière thermoconductrice, de deux côtés, à l'élément PTC (30), **caractérisé en ce que** les éléments de dissipation de chaleur (12) comprennent une structure en nappe (80) munie de perforations, sous la forme d'un treillis métallique ou d'un métal déployé en matériau thermoconducteur, **en ce que** la structure en nappe (80) présente les mêmes perforations sur la totalité de l'extension plane, **en ce que** l'élément de dissipation de chaleur (12) est formé d'une bande courbée de manière sinueuse et présente des surfaces latérales principales (48) qui sont reliées entre elles par des nervures (46, 50), **en ce que** les nervures (46, 50) sont situées dans deux plans discrets (E3, E4) qui sont parallèles aux ouvertures d'entrée et de sortie (16, 18) du carter (2) et qui s'étendent perpendiculairement aux surfaces latérales principales (48), et **en ce qu'**une des surfaces latérales principales (48) de l'élément de dissipation de chaleur (12) repose contre l'élément PTC (30) avec intercalation d'un support (34) en forme de plaque.

2. Dispositif de chauffage électrique selon la revendication 1, **caractérisé en ce que** l'élément de dissipation de chaleur (12) est formé à partir de la structure en nappe (80) munie de perforations.

3. Dispositif de chauffage électrique selon l'une quelconque des revendications précédentes, **caractérisé en ce que** la structure en nappe (80) munie de perforations forme l'élément de dissipation de chaleur (12) et une piste conductrice reliée de manière électriquement conductrice à l'élément PTC (30).

4. Dispositif de chauffage électrique selon l'une quelconque des revendications précédentes, **caractérisé en ce que** le carter (2) est réalisé sous la forme d'un cadre et forme, sur des côtés opposés, les ouvertures d'entrée et de sortie (16 ; 18) entre lesquelles apparait le corps stratifié (8).

5. Dispositif de chauffage électrique selon l'une quelconque des revendications précédentes, **caractérisé en ce que** chacun des éléments de dissipation de chaleur (12) est formé d'au moins une bande de la structure en nappe (80) en matériau thermoconducteur munie de perforations et courbée de manière sinueuse.

6. Dispositif de chauffage électrique selon la revendication 5, **caractérisé en ce que** les surfaces latérales principales (40) de la bande courbée de manière sinueuse sont reliées entre elles par des nervures (42, 46) qui sont agencées dans deux plans (E1 ; E2) parallèles à une surface latérale principale de dissipation de chaleur de l'élément PTC.

7. Dispositif de chauffage électrique selon la revendication 6, **caractérisé en ce que** les nervures (42) sont agencées les unes à côté des autres dans une direction transversale par rapport à une direction de passage (F) du milieu à chauffer.

8. Dispositif de chauffage électrique selon la revendication 6, **caractérisé en ce que** les nervures (46) sont agencées les unes derrière les autres dans la direction de passage (F) du milieu à chauffer.

9. Dispositif de chauffage électrique selon la revendication 5, **caractérisé en ce que** les surfaces latérales principales de la bande courbée de manière sinueuse sont reliées entre elles par des nervures (50) qui sont agencées dans deux plans (E3 ; E4) parallèles à l'ouverture d'entrée ou de sortie (16 ; 18).

10. Dispositif de chauffage électrique selon l'une quelconque des revendications 1 à 4, **caractérisé en ce que** chacun des éléments de dissipation de chaleur (12) présente au moins une bande de la structure en nappe en matériau thermoconducteur, qui est munie de perforations et est courbée sous forme de plis de dissipation de chaleur (56) qui présentent au moins deux surfaces latérales principales (52), s'étendant de manière essentiellement parallèle à l'ouverture d'entrée ou de sortie, et une nervure (54) reliant les surfaces latérales principales sur un côté opposé à l'élément PTC (30).

11. Dispositif de chauffage électrique selon la revendication 10, **caractérisé en ce que** plusieurs plis (56) sont agencés l'un derrière l'autre dans la direction de passage (F) du milieu à chauffer.

12. Dispositif de chauffage électrique selon l'une quelconque des revendications précédentes, **caractérisé en ce que** la piste conductrice est formée d'au moins un segment coudé de l'élément de dissipation de chaleur reposant au moins partiellement contre l'élément PTC.
